# EUROPÄISCHE PATENTSCHRIFT

(11) **EP 1 675 779 B1**
(45) Veröffentlichungstag und Bekanntmachung des Hinweises auf die Patenterteilung: **04.04.2007**
(21) Anmeldenummer: 04789978.6
(22) Anmeldetag: 13.10.2004
(51) Int. Cl.: B65D 51/16, H01M 2/12

(54) **VORRICHTUNG ZUM ABDICHTEN EINER BEHÄLTERÖFFNUNG**
DEVICE FOR SEALING THE OPENING OF A CONTAINER
DISPOSITIF POUR FERMER HERMETIQUEMENT L'OUVERTURE D'UN CONTENANT

(30) Priorität: 21.10.2003 DE 10349395
(43) Veröffentlichungstag der Anmeldung: 05.07.2006
(73) Patentinhaber: Hartung Kunststoffwerk- Werkzeugbau GmbH, 79331 Teningen-Nimburg (DE)
(72) Erfinder: HÄMMERLE, Alexander, 79114 Freiburg (DE)
(74) Vertreter: Zimmermann, Günter
(86) Internationale Anmeldenummer: PCT/DE2004/002274
(87) Internationale Veröffentlichungsnummer: WO 2005/039999

(56) Entgegenhaltungen:
- EP-A- 0 794 582
- DE-C- 114 843
- US-A- 5 388 615
- US-A1- 2002 166 864
- US-B1- 6 491 176

## Beschreibung

Die Erfindung bezieht sich auf eine Vorrichtung zum Abdichten einer Behälteröffnung mit einem Grundkörper und einem Ventil aus elastischem Material, wobei das Ventil und der Grundkörper ein Mehrkomponentenspritzgußteil bilden und das Ventil an oder in dem Grundkörper einstückig angeformt ist und am Außenumfang des Grundkörpers mindestens ein an das Ventil einstückig angeformtes Dichtungselement vorgesehen ist.

Eine derartige Vorrichtung ist durch die US 2002/0166864 A1 bekannt. In dieser Druckschrift wird ein Verschluss für eine Trinkflasche beschrieben, wobei an einem Grundkörper ein Ventil angeformt ist, welches den Austritt der Trinkflüssigkeit reguliert. Das Ventil ist selbstabdichtend und kann nur durch Druck von außen geöffnet werden. Sobald der Druck von außen nachlässt, verschließen die Ventilteile den Austritt.

In der US-A-5 388 615 wird ein Verschlussmittel und Dichtungsventil für Behälteröffnungen, insbesondere für Akkumulatorbatterien, beschrieben. Der Verschluss besteht aus einem ersten Gehäuseteil und einem zweiten Gehäuseteil, zwischen welchen eine Dichtscheibe in Form einer Lochscheibe aus einem thermoplastischen Elastomer angeordnet ist. Die Lochscheibe liegt zur Abdichtung an einer Dichtkante des zweiten Gehäuseteils an und ihre Dicke nimmt zum Loch hin ab. Die Dichtscheibe ist als isoliertes Teil in den Ventilgrundkörper eingelegt.

Es ist auch ein Verschlußstopfen für eine Autostarterbatterie bekannt, welcher mittels eines Schraubgewindes in eine Zellenöffnung eingeschraubt wird. Der Verschlußstopfen ist mehrteilig aufgebaut und weist innerhalb des Grundkörpers das Ventil in Form eines Entgasungsventils auf, welches das Austreten von Batteriesäure und Wasserstoffgas verhindert und bei Überdrücken öffnet, um eine Entgasung zu gestatten. Ein Entgasungsventil, welches in dem Verschlußstopfen verwendet wird, ist in der DE 297 14 031 U1 beschrieben. Da der Verschlußstopfen aus mehreren Teilen besteht, welche zur Fertigstellung des Stopfens zusammengebaut werden müssen, ist der bekannte Verschlußstopfen nachteiligerweise aufwendig und teuer herzustellen.

Die Aufgabe der Erfindung wird somit darin gesehen, die Vorrichtung der eingangs genannten Art derart weiterzuentwickeln, dass eine besonders einfache Vorrichtung zum Abdichten von Starterbatterien geschaffen wird.

Zur Lösung dieser Aufgabe wird bei einer Vorrichtung gemäß dem Oberbegriff. des Anspruchs 1 erfindungsgemäß vorgeschlagen, dass die Vorrichtung entsprechend den kennzeichneten Merkmalen dieses Anspruchs ausgebildet ist.

Bei der erfindungsgemäßen Vorrichtung wird die Ventilfunktion durch ein im Mehrkomponentenverfahren eingespritztes Ventil aus elastischem Material, insbesondere ein thermoelastisches Elastomer, erreicht. Dadurch kann die erfindungsgemäße Vorrichtung kostengünstiger hergestellt werden, ohne daß die Ventilfunktion beeinträchtigt wird, so daß auch ein sicheres Entgasen bei gleichzeitiger Dichtheit gegen Austreten der Batterieflüssigkeit gewährleistet ist. Die Vorrichtung kann beispielsweise als Verschlußstopfen ausgebildet sind. Sie kann aber auch als Batteriedeckel ausgebildet sein, an welchem das Ventil angespritzt ist.

Je nach Anwendungsbereich und Druckverhältnissen ist die Stärke des beweglichen Teils des Ventils unterschiedlich ausgebildet. Eine bevorzugte Ausführungsform der Erfindung sieht daher vor, daß das Ventil einstückig ausgebildet ist und aus einem Ventilkörper und mindestens einem Dichtungslappen besteht, wobei die Dicke des Dichtungslappens kleiner ist als die Dicke des Ventilkörpers. Es sind auch mehrere Dichtungslappen denkbar, wobei der oder die Dichtungslappen bewegbar sind und an unterschiedlichen Bereichen des Ventilkörpers angeformt sind. Durch den dünneren Dichtungslappen ist das Ventil auch bei kleineren Drucken beweglich und kann sicher Öffnen und Schließen. Insbesondere ergibt sich eine gute Dichtung, wenn der Dichtungslappen mit seinen äußeren Bereichen dichtet. Vorteilhafterweise liegt deshalb der Dichtungslappen mit einem radial nach außen weisenden Endbereich an einer Dichtungskante und/oder einer Dichtungsfläche an. Zweckmäßigerweise kann die Dichtungskante und/oder die Dichtungsfläche eine Innenkante und/oder ein Außenrand einer innerhalb des Grundkörpers angeordneten Hülse sein. Es ist aber auch denkbar, daß es sich anstelle der Hülse um einen Öffnungsstutzen der Behälteröffnung handelt.

Eine weitere bevorzugte Ausführungsform der Erfindung sieht vor, daß der Dichtungslappen unterschiedliche Dicken aufweist. In dem beschriebenen Ausführungsbeispiel hat der Dichtungslappen eine gleichmäßige Dicke, wobei der Dichtungslappen von oben gesehen etwa halbkreisförmig ausgebildet ist und mit seinem Innenrandbereich an dem Ventilkörper einstückig angeformt ist. In diesem Innenrandbereich weist der Dichtungslappen eine große Federkraft auf, welche bei konstanter Dicke des Dichtungslappens zu den Außenrandbereichen des Dichtungslappens hin abnimmt. Der Dichtungslappen kann nun in diesen Außenrandbereichen eine größere Dicke aufweisen als in dem Innenrandbereich, wodurch etwa eine konstante Federkraft des Dichtungslappens über den gesamten Querschnitt des Dichtungslappens erreicht wird.

Da die erfindungsgemäße Vorrichtung als Mehrkomponentenspritzgußteil hergestellt ist, können beispielsweise an dem Ventil weitere Elemente aus einem elastischen Material angeformt werden. Eine weitere bevorzugte Ausführungsform der Erfindung sieht deshalb vor, daß sich der Ventilkörper bis zu einem Außenumfang des Grundkörpers erstreckt und mindestens ein Dichtungselement an der Außenumfangsfläche des Grundkörpers angeformt ist. Über dieses Dichtungselement kann beispielsweise der Verschlußstopfen nach außen abgedichtet werden. Als Dichtungselement sind unterschiedliche Formen denkbar. Vorteilhafterweise ist das mindestens eine Dichtungselement ein an dem Ventilkörper einstückig angeformter O-Ring. Es können auch mehrere O-Ringe an dem Ventilkörper angeformt sein, um je nach Bedürfnis und Anwendungsbeispiel eine zuverlässige Dichtung zu erreichen.

Die Erfindung wird nachstehend anhand der Zeichnung näher erläutert. Die Zeichnung zeigt ein Ausführungsbeispiel der Erfindung. Hierbei stellt dar:

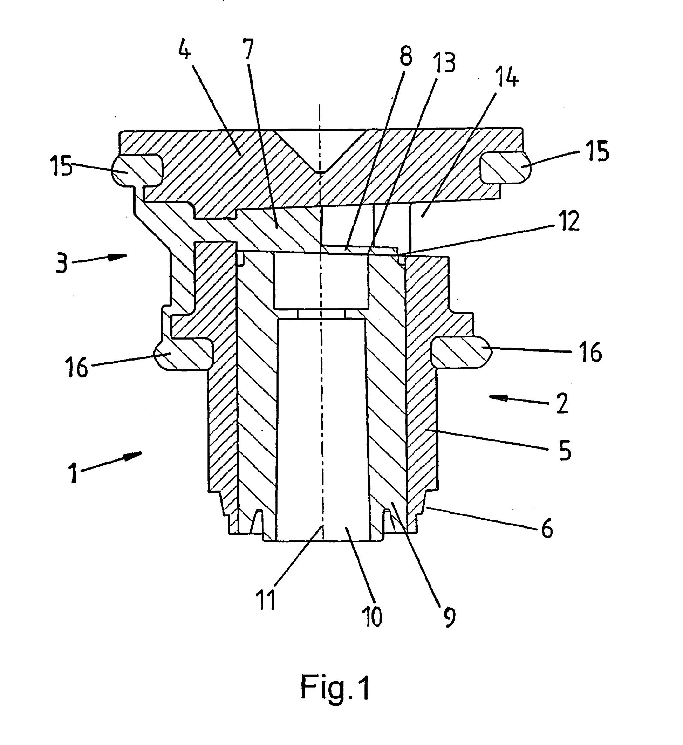

Fig. 1 einen Querschnitt durch die erfindungsgemäße Vorrichtung.

Bei der in Fig. 1 dargestellten erfindungsgemäßen Vorrichtung handelt es sich um einen Verschlußstopfen 1 für eine Autostarterbatterie. Der Verschlußstopfen 1 ist als Zweikomponentenspritzgußteil einstückig ausgebildet und weist einen Grundkörper 2 und ein Ventil 3 auf. Der Grundkörper 2 besteht aus einem Hartkunststoff wie beispielsweise Polypropylen und das Ventil 3 besteht aus einem thermoelastischen Elastomer. Der Grundkörper 2 weist ein Deckelteil 4 und einen einstückig an das Deckelteil 4 angeformten zylinderförmigen Stutzen 5 mit einem in der Zeichnung nur schematisch dargestellten Außengewinde 6 auf, um den Stopfen in die Batterie einzuschrauben. Zwischen dem Stutzen 5 und dem Deckelteil 4 ist eine Ausnehmung in dem Stutzen 5 an seinem deckelteilseitigen Ende vorgesehen, in welche das Ventil 3 eingespritzt ist. Das Ventil 3 ist als Formteil einstückig ausgebildet und weist einen Ventilkörper 7 und einen angeformten Dichtungslappen 8 auf. Der Dichtungslappen 8 ist im Querschnitt erheblicher dünner ausgebildet als der Ventilkörper 7. Innerhalb des Stutzens 5 ist eine Hülse 9 angeordnet, welche eine durchgehende zentrische Bohrung 10 aufweist und längs einer Längsachse 11 des Verschlußstopfens 1 verläuft. Der Ventilkörper 7 erstreckt sich vom Außenumfang des Verschlußstopfens 1 in radialer Richtung bis zur Längsachse 11. Ab der Längsachse 11 erstreckt sich der Dichtungslappen radial nach außen, wobei die Unterseite des Ventilkörpers 7 mit der Unterseite des Dichtungslappens 8 bündig ist. In dem Ausführungsbeispiel ist der Dichtungslappen 8 am unteren Außenrandbereich des Ventilkörpers 7 angeformt und besitzt die Form einer halbkreisförmigen Scheibe. Der Dichtungslappen 8 könnte auch an anderen Bereichen des Außenrandes des Ventilkörpers 7 oder des Ventils 3 angeformt sein und auch eine andere Form aufweisen. Das deckelteilseitige Ende der Bohrung 10 wird durch das Ventil 3, insbesondere durch die Unterseiten des Ventilkörpers 7 und des Dichtungslappens 8, abgedeckt, während das gegenüberliegende Ende der Bohrung 10 offen ist und strömungsmäßig mit dem Inneren der Batterie verbunden ist. Die Hülse 9 weist einen deckelseitigen Außenrand 12 und eine deckelseitige Innenkante 13 auf. Zum Abdichten liegt der Dichtungslappen 8 an dieser Innenkante 13 der Hülse 9 an. Er könnte auch an dem Außenrand 12 anliegen.

Bilden sich im Inneren der Batterie Gase, so können diese nun über die Bohrung 10 austreten, indem der in der Batterie herrschende Überdruck den Dichtungslappen 8 in Richtung des Deckelteils 4 bewegt und damit das Ventil 3, welches ein Entgasungsventil darstellt, öffnet. Die Gase können nun über einen Austrittskanal 14, welcher oberhalb des Dichtungslappens 8 zwischen dem Deckelteil 4 und dem deckelseitigen Ende des Stutzens 5 in Form einer Ausnehmung in dem Verschlußstopfen 1 angeordnet ist, austreten. Bei normalen Druckverhältnissen wird der Dichtungslappen 8 gegen die Innenkante 13 der Hülse 9 gedrückt und dichtet damit von außen her gegen das Innere der Batterie ab.

Zur Abdichtung des Verschlußstopfens 1 nach außen sind an dem Grundkörper 2 noch ein erster angeformter Dichtungsring 15 und ein zweiter angeformter Dichtungsring 16 vorgesehen. Die beiden Dichtungsringe 15 und 16 bestehen ebenfalls aus einem elastischen Material, insbesondere aus einem thermoelastischen Elastomer. Bei dem dargestellten Ausführungsbeispiel sind die beiden Dichtungsringe 15 und 16 einstückig mit dem Ventil 3 ausgebildet. Der erste Dichtungsring 15 verläuft über den Außenumfang des Deckelteils 4, während der zweite Dichtungsring 16 über den Außenumfang des Stutzens 5 verläuft. Der Dichtungsring 15 und der Dichtungsring 16 sind jeweils als O-Ring ausgebildet und derart angeordnet, daß sich zwischen dem Dichtungsring 15 und dem Dichtungsring 16 der Austrittskanal 14 befindet.

Durch die einstückige Ausbildung des Verschlußstopfens 1 als Zweikomponentenspritzgußteil, bestehend aus einem Hartkunststoff für den Grundkörper 2 und einem Elastomer für das Ventil 3, kann der Verschlußstopfen 1 als Massenartikel insgesamt kostengünstig hergestellt werden, wobei gleichzeitig auch ein sicheres Entgasen und eine Dichtheit gegen Austreten der Batterieflüssigkeit gewährleistet ist.

## Patentansprüche

1. Vorrichtung zum Abdichten einer Behälteröffnung mit einem Grundkörper (2) und einem Ventil (3) aus elastischem Material, wobei das Ventil (3) und der Grundkörper (2) ein Mehrkomponentenspritzgußteil bilden und das Ventil (3) an oder in dem Grundkörper (2) einstückig angeformt ist und am Außenumfang des Grundkörpers (2) mindestens ein an das Ventil (3) einstückig angeformtes Dichtungselement (15, 16) vorgesehen ist,
**dadurch gekennzeichnet,**
**dass** die Vorrichtung zur Abdichtung von Öffnungen einer Starterbatterie geeignet ist, wobei das scheibenförmige Ventil (3) zur Anlage an eine Dichtkante (13) und/oder eine Dichtfläche (12) des Grundkörpers (2) gelangt und eine Hälfte der Scheibe so dünn ausgeführt ist, dass ein vorbestimmter Überdruck in der Batterie diese Hälfte von der ihr zugeordneten Dichtkante (13) und/oder Dichtfläche (12) abhebt.

2. Vorrichtung nach Anspruch 1.
**dadurch gekennzeichnet,**
**dass** das Ventil (3) einstückig ausgebildet ist und aus einem Ventilkörper (7) und mindestens einem Dichtungslappen (8) besteht, wobei die Dicke des Dichtungslappens (8) kleiner ist als die Dicke des Ventilkörpers (7).

3. Vorrichtung nach Anspruch 2,
**dadurch gekennzeichnet,**
**dass** der Dichtungslappen (8) mit einem radial nach außen weisenden Endbereich an der Dichtungskante (13) und/oder der Dichtungsfläche (12) anliegt.

4. Vorrichtung nach Anspruch 2 oder 3,
**dadurch gekennzeichnet,**
**dass** die Dichtungskante (13) und/oder die Dichtungsfläche (12) eine Innenkante (13) und/oder ein Außenrand (12) einer innerhalb des Grundkörpers (2) angeordneten Hülse (9) sind.

5. Vorrichtung nach einem der vorhergehenden Ansprüche 2 bis 4,
**dadurch gekennzeichnet,**
**dass** der Dichtungslappen (8) unterschiedliche Dicken aufweist.

6. Vorrichtung nach einem der vorhergehenden Ansprüche,
**dadurch gekennzeichnet,**
**dass** der Grundkörper (2) aus einem Deckelteil (4) und einem einstückig angeformten Stutzen (5) mit Außengewinde (6) besteht.

7. Vorrichtung nach einem der vorhergehenden Ansprüche,
**dadurch gekennzeichnet,**
**dass** das Ventil (3) in einem Bereich zwischen Deckelteil (4) und Stutzen (5) angeformt ist.

8. Vorrichtung nach einem der vorhergehenden Ansprüche 2 bis 7,
**dadurch gekennzeichnet,**
**dass** sich der Ventilkörper (7) bis zu dem Außenumfang des Grundkörpers (2) erstreckt und das mindestens eine Dichtungselement (15, 16) an der Außenumfangsfläche des Grundkörpers (2) angeformt ist.

9. Vorrichtung nach Anspruch 8,
**dadurch gekennzeichnet,**
**dass** das mindestens eine Dichtungselement (15, 16) ein an dem Ventilkörper (7) einstückig angeformter O-Ring ist.

## Claims

1. Device for sealing a container opening with a base body (2) and a valve (3) of resilient material, wherein the valve (3) and the base body (2) form a multicomponent injection moulding and the valve (3) is formed as one piece on or in the base body (2), and on the outer periphery of the base body (2) is provided at least one sealing element (15, 16) formed as one piece with the valve (3), **characterised in that** the device is suitable for sealing openings of a starter battery, wherein the disc-like valve (3) comes to rest on a sealing edge (13) and/or a sealing surface (12) of the base body (2) and half of the disc is constructed so thin that a pre-determined positive pressure in the battery lifts this half from its allocated sealing edge (13) and/or surface (12).

2. Device according to claim 1, **characterised in that** the valve (3) is formed as one piece and comprises a valve body (7) and at least one sealing tab (8), wherein the thickness of the sealing tab (8) is less than the thickness of the valve body (7).

3. Device according to claim 2, **characterised in that** the sealing tab (8) lies with an end zone pointing radially outward on the sealing edge (13) and/or the sealing surface (12).

4. Device according to claim 2 or 3, **characterised in that** the sealing edge (13) and/or the sealing surface (12) are an inner edge (13) and/or an outer edge (12) of a sleeve (9) arranged inside the base body (2).

5. Device according to any of the preceding claims 2 to 4, **characterised in that** the sealing tab (8) has different thicknesses.

6. Device according to any of the preceding claims, **characterised in that** the base body (2) comprises a cover part (4) and formed as one piece therewith a connector (5) with an outer thread (6).

7. Device according to any of the preceding claims, **characterised in that** the valve (3) is formed in a zone between the cover part (4) and the connector (5).

8. Device according to any of the preceding claims 2 to 7, **characterised in that** the valve body (7) extends to the outer periphery of the base body (2) and at least one sealing element (15, 16) is formed on the outer peripheral surface of the base body (2).

9. Device according to claim 8, **characterised in that** the at least one sealing element (15, 16) is an O-ring formed as one piece with the valve body (7).

## Revendications

1. Dispositif pour fermer hermétiquement l'ouverture d'un récipient, avec un corps de base (2) et une soupape (3) en matériau élastique, la soupape (3) et le corps de base (2) formant une pièce moulée par injection à plusieurs composants et la soupape (3) étant formée d'un seul tenant sur ou dans le corps de base (2), et au moins un élément d'étanchéité (15, 16), formé d'un seul tenant sur la soupape (3), étant prévu sur la périphérie extérieure du corps de base (2),
**caractérisé en ce que** le dispositif convient pour fermer hermétiquement des ouvertures d'une batterie de démarrage, sachant que la soupape (3) en forme de disque parvient en application contre une arête d'étanchéité (13) et/ou une surface d'étanchéité (12) sur le corps de base (2) et qu'une moitié du disque est réalisée d'une minceur telle qu'une surpression prédéterminée dans la batterie décolle cette moitié de l'arête d'étanchéité (13) et/ou de la surface d'étanchéité (12) qui lui est associée.

2. Dispositif selon la revendication 1, **caractérisé en ce que** la soupape (3) est réalisée d'un seul tenant et est constituée d'un corps de soupape (7) et d'au moins une patte d'étanchéité (8), l'épaisseur de la patte d'étanchéité (8) étant inférieure à l'épaisseur du corps de soupape (7).

3. Dispositif selon la revendication 2, **caractérisé en ce que** la patte d'étanchéité (8) s'applique contre l'arête d'étanchéité (13) et/ou la surface d'étanchéité (12) par une région terminale dirigée radialement vers l'extérieur.

4. Dispositif selon la revendication 2 ou 3, **caractérisé en ce que** l'arête d'étanchéité (13) et/ou la surface d'étanchéité (12) sont une arête intérieure (13) et/ou un bord extérieur (12) d'une douille (9) disposée à l'intérieur du corps de base (2).

5. Dispositif selon l'une des revendications précédentes 2 à 4, **caractérisé en ce que** la patte d'étanchéité (8) présente différentes épaisseurs.

6. Dispositif selon l'une des revendications précédentes, **caractérisé en ce que** le corps de base (2) est constitué d'une partie de couvercle (4) et d'un embout (5) formé d'un seul tenant et doté d'un filetage extérieur (6).

7. Dispositif selon l'une des revendications précédentes, **caractérisé en ce que** la soupape (3) est formée dans une région située entre la partie de couvercle (4) et l'embout (5).

8. Dispositif selon l'une des revendications précédentes 2 à 7, **caractérisé en ce que** le corps de soupape (7) s'étend jusqu'à la périphérie extérieure du corps de base (2) et l'élément d'étanchéité (15, 16) au moins unique est formé sur la surface périphérique extérieure du corps de base (2).

9. Dispositif selon la revendication 8, **caractérisé en ce que** l'élément d'étanchéité (15, 16) au moins unique est un joint torique formé d'un seul tenant sur le corps de soupape (7).
